# EUROPEAN PATENT APPLICATION

(11) **EP 3 567 451 A1**
(43) Date of publication of application: **13.11.2019**
(21) Application number: 18213906.3
(22) Date of filing: 19.12.2018
(51) Int. Cl.: G06F 3/01, G06F 3/03, G06K 9/00, G06Q 30/06, G06Q 30/02

(54) **METHOD AND DEVICE FOR HUMAN-MACHINE INTERACTION IN A STORAGE UNIT, STORAGE UNIT AND STORAGE MEDIUM**

(30) Priority: 09.05.2018 CN 201810439678
(71) Applicant: Quatius Technology (China) Limited, 222000 Lianyungang Jiangsu (CN)
(72) Inventor: WU, Xiao, Lianyungang, Jiangsu 222000 (CN); HU, Longyao, Lianyungang, Jiangsu 222000 (CN); GENG, Lu, Lianyungang, Jiangsu 222000 (CN); LIU, Runsheng, Lianyungang, Jiangsu 222000 (CN); WU, Jing, Lianyungang, Jiangsu 222000 (CN); FAN, Yuchen, Lianyungang, Jiangsu 222000 (CN); LIU, Huaiguo, Lianyungang, Jiangsu 222000 (CN)
(74) Representative: Noble, Nicholas

(57) **Abstract**

The present disclosure relates to a method and a device for human-machine interaction in a storage unit, a storage unit and a storage medium. The method includes: detecting a user behavior in a preset sensing area, the preset sensing area being a sensing area of the storage unit; extracting and analyzing grabbing behavior feature information corresponding to the user behavior; determining a target position that a user grabs for based on the grabbing behavior feature information; obtaining a target item identification of a stored item corresponding to the target position based on a preset corresponding relationship between a storage dividing position and a corresponding stored item; and pushing corresponding information of the target item identification. The target position of the user behavior may be judged by detecting and analyzing the user behavior, and the item desired by the user can be determined, which realizes an effect that related information of the corresponding item of the target position may be actively pushed to the user in real time, so that the user may quickly and easily know corresponding information of the desired item.

## Description

### TECHNICAL FIELD

The present disclosure relates to the field of sensing technologies, and in particular, to a method and a device for human-machine interaction in a storage unit, as well as a storage unit and a storage medium.

### BACKGROUND

With further improvement of people's consumption level and consumption quality, consumption environment and consumption experience of sales places such as supermarkets are becoming more and more important.

During the process of the traditional shopping consumption, when a consumer selects an item, the consumer often faces a case of not knowing the details of the item. In most cases, the consumer will know related information of the item by means of asking a salesperson, which takes more time on inquiry. Moreover, the result of the inquiry may be inaccurate and there is even no salesperson for inquiry. The traditional mode of shopping consumption has a defect that the consumer cannot know item information in time.

### SUMMARY

Based on this, in view of the technical problem that the consumer cannot know the item information in time, it is necessary to provide a method and a device for human-machine interaction in a storage unit, as well as a storage unit and a storage medium, which are capable of feeding back the item information in time.

A method for human-machine interaction in a storage unit is provided, and includes:
detecting a user behavior in a preset sensing area, the preset sensing area being a sensing area of the storage unit;
extracting and analyzing grabbing behavior feature information corresponding to the user behavior;
determining a target position that a user grabs for based on the grabbing behavior feature information;
obtaining a target item identification of a stored item corresponding to the target position based on a preset corresponding relationship between a storage dividing position and a corresponding stored item; and
pushing corresponding information of the target item identification.

In an embodiment, extracting and analyzing grabbing behavior feature information corresponding to the user behavior includes:
extracting arm motion information in the user behavior; and
performing an intended direction analysis on an arm motion meeting a preset requirement when detecting that gesture information and direction information of the arm motion information meet the preset requirement.

In an embodiment, extracting and analyzing grabbing behavior feature information corresponding to the user behavior includes:
extracting sight line information in the user behavior, and performing an intended direction analysis on the sight line information meeting a preset requirement.

In an embodiment, before detecting a user behavior in a preset sensing area, the method further includes:
obtaining coordinate information corresponding to a user position in the preset sensing area;
wherein determining a target position that a user grabs for based on the grabbing behavior feature information includes:
   obtaining intended direction information in the grabbing behavior feature information; and
   determining the target position of a grabbing behavior based on the coordinate information and the intended direction information.

In an embodiment, pushing corresponding information of the target item identification includes:
pushing an information displaying instruction of an item based on the target item identification, the information displaying instruction being used to display corresponding information of the item, and the corresponding information including feature information of the item;
wherein after pushing corresponding information of the target item identification, the method further includes:
   pushing the corresponding information of a preset item associated with the feature information when a motion that the user takes a target item is not detected within a preset time.

In an embodiment, before detecting a user behavior in a preset sensing area, the method further includes:
obtaining user identity information in the preset sensing area; and
pushing item information stored associatively with the user identity information when the user identity information corresponding to a user is stored in a history record;
wherein after pushing corresponding information of the target item identification, the method further includes:
   storing the user identity information and corresponding target item information associatively.

In an embodiment, after storing associatively the user identity information with corresponding target item information, the method further includes:
counting data stored associatively within a preset time;
determining attention degrees of various items based on a statistical result; and
sorting the items having the same feature information based on the corresponding attention degrees according to the attention degrees of the items and the feature information corresponding to the items.

A device for human-machine interaction in a storage unit is provided and includes:
a detecting module for user behavior, configured to detect a user behavior in a preset sensing area, the preset sensing area being a sensing area of the storage unit;
an extracting and analyzing module for grabbing behavior feature information, configured to extract and analyze grabbing behavior feature information corresponding to the user behavior;
a determining module for target position, configured to determine a target position that a user grabs for based on the grabbing behavior feature information;
an obtaining module for target item identification, configured to obtain a target item identification of a stored item corresponding to the target position based on a preset corresponding relationship between a storage dividing position and a corresponding stored item; and
an information pushing module, configured to push corresponding information of the target item identification.

A storage unit is provided and includes a storage unit body and a processor, the storage unit body is connected with the processor, and the processor stores computer programs, which, when executed by the processor, cause the processor to implement following steps:
detecting a user behavior in a preset sensing area, the preset sensing area being a sensing area of the storage unit;
extracting and analyzing grabbing behavior feature information corresponding to the user behavior;
determining a target position that a user grabs for based on the grabbing behavior feature information;
obtaining a target item identification of a stored item corresponding to the target position based on a preset corresponding relationship between a storage dividing position and a corresponding stored item; and
pushing corresponding information of the target item identification.

A computer readable storage medium is provided and stores computer programs, wherein when the computer programs are executed by a processor, the processor implements following steps:
detecting a user behavior in a preset sensing area, the preset sensing area being a sensing area of the storage unit;
extracting and analyzing grabbing behavior feature information corresponding to the user behavior;
determining a target position that a user grabs for based on the grabbing behavior feature information;
obtaining a target item identification of a stored item corresponding to the target position based on a preset corresponding relationship between a storage dividing position and a corresponding stored item; and
pushing corresponding information of the target item identification.

In the above method and device for human-machine interaction in a storage unit, the storage unit and the storage medium, by detecting a user behavior in a preset sensing area, extracting and analyzing grabbing behavior feature information corresponding to the user behavior, it is possible to obtain accurate and effective grabbing behavior information of the user for the storage unit, and determine a target position that a user grabs for. A corresponding target item identification is obtained, and corresponding information of the target item identification is pushed to the user. The target position of the user behavior may be determined by detecting and analyzing the user behavior, and the item desired by the user can be determined, which realizes an effect that related information of the corresponding item of the target position may be actively pushed to the user in real time, so that the user may quickly and easily know corresponding information of the desired item.

### BRIEF DESCRIPTION OF DRAWINGS

FIG. 1 is an application environment diagram of a method for human-machine interaction in a storage unit according to an embodiment of the present disclosure;
FIG. 2 is an application environment diagram of a method for human-machine interaction in a storage unit according to another embodiment of the present disclosure;
FIG. 3 is an application environment diagram of a method for human-machine interaction in a storage unit according to another embodiment of the present disclosure;
FIG. 4 is a structural block diagram of a device for human-machine interaction in a storage unit according to an embodiment of the present disclosure;
FIG. 5 is a structural block diagram of a device for human-machine interaction in a storage unit according to another embodiment of the present disclosure; and
FIG. 6 is a structural block diagram of a storage unit according to an embodiment of the present disclosure.

### DETAILED DESCRIPTION OF EMBODIMENTS

In order to make the objects, technical solutions and advantages of the present disclosure more clear, the present disclosure will be further described in detail below with reference to the accompanying drawings and embodiments. It should be understood that the specific embodiments described herein are merely used to explain the present disclosure and not used to limit the present disclosure.

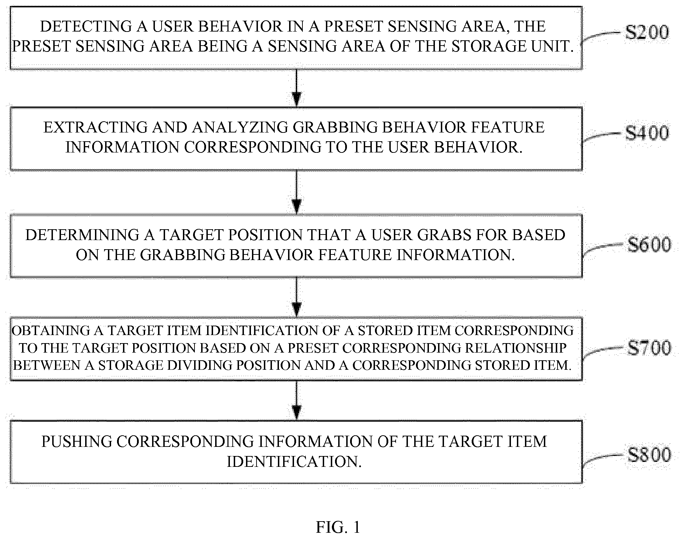

As shown in FIG. 1, a method for human-machine interaction in a storage unit is provided. The method includes following steps.

Step S200, detecting a user behavior in a preset sensing area, the preset sensing area being a sensing area of the storage unit.

The detection technology is a basis of the video technology of motion detection, which is widely applied to various fields, such as an unattended monitoring field. The user behavior is detected in the preset area, which can lower costs for manual monitoring and improve monitoring efficiency and monitoring accuracy. The storage unit refers to a device for storing items. The storage unit can be divided into a plurality of storage areas, and corresponding items are stored in different storage areas. A range threshold of the sensing area of the storage unit can be set as needed. Specifically, the sensing area of the storage unit may be a range in which a user can touch the storage unit and can be detected. The user behavior includes a language behavior, a motion behavior, a position movement and a facial expression of the user in the preset area, which may provide a basis for pushing item information.

Step S400, extracting and analyzing grabbing behavior feature information corresponding to the user behavior.

The grabbing behavior feature information refers to a specific motion performed by the user on an item storage area of the storage unit within the detecting range. It should be noted that a grabbing behavior includes grabbing for a body motion and position locking of eye focus. The specific motion performed for a preset orientation includes a movement that an arm of the user moves towards the preset orientation, focus positioning of an eye in the preset orientation, and overall incline that the body including the head of the user inclines towards the preset orientation, and so on.

Step S600, determining a target position that a user grabs for based on the grabbing behavior feature information.

Based on the grabbing behavior feature information, the motion of the user in the preset orientation may be judged, and the target direction of the grabbing behavior may be judged, thereby determining the item of interest to the user. For example, by analyzing the grabbing motion of the arm or the locking position of the sight line of the user, the state of the user may be determined, including states of looking at the item, being about to grabbing, grabbing, having grabbed, and the like. During transition of the states, the position where the arm motion of the user intends to reach may be determined, thereby determining the target position that the user grabs for, and displaying the item information of the target location to the user. For example, it may be determined that the user is in the state of looking at an item, and a locking area of the sight line is the target position of the user, when detecting that the sight line of the user is locked at a certain position of the item storage area of the storage unit but the arm does not move. It may be determined that the user is in the state of being about to grab an item, when the arm motion of the user is detected and the posture and the direction of the arm motion are the same as the locking position of the sight line of the user. It is in the state of grabbing an item, when detecting that the user touches the item at the target position. It is in the state of having grabbed an item, when detecting that the user has taken and moved the item. By determining the behavior state of the user for each item, a degree of interest to the user for the item may also be determined, so as to count the attention degree of the user for each item, and recommend the item.

Step S700, obtaining a target item identification of a stored item corresponding to the target position based on a preset corresponding relationship between a storage dividing position and a corresponding stored item.

The storage unit is divided into a plurality of storage positions, which correspondingly store various items. The storage positions and stored item identifications have a one-to-one corresponding relationship, and the corresponding stored item identification may be obtained according to the storage positions. In this embodiment, an item identification corresponding to the target location may be obtained based on the target position of the item of interest to the user. For example, cola, Sprite, cookies, and bread are stored in the storage unit, and their positions are A, B, C, and D respectively, corresponding to item identifications 1, 2, 3, and 4 respectively. The target position of the item of interest to the user is determined as the position A when the item of interest to the user is determined as cola, furthermore the item identification 1 corresponding to the position A may be obtained.

Step S800, pushing corresponding information of the target item identification.

Different item identifications correspond to different items. After determining the target position of the item of interest to the user, the item identification corresponding to the target position is further obtained, and the item information corresponding to the item identification is pushed. The item information includes conventional data of the item such as a price, weight, shelf life, and specific attributes of the item such as function, raw materials, and place of origin. The item identification and the corresponding item information thereof have been stored in a processor in the storage unit.

In the above method for human-machine interaction in a storage unit, by detecting a user behavior in a preset sensing area, extracting and analyzing grabbing behavior feature information corresponding to the user behavior, it is possible to obtain accurate and effective grabbing behavior information of the user for the storage unit, and determine a target position that a user grabs for. A corresponding target item identification is obtained, and corresponding information of the target item identification is pushed to the user. The target position of the user behavior may be determined by detecting and analyzing the user behavior, and the item desired by the user can be determined, which realizes an effect that related information of the corresponding item of the target position may be actively pushed to the user in real time, so that the user may quickly and easily know corresponding information of the desired item.

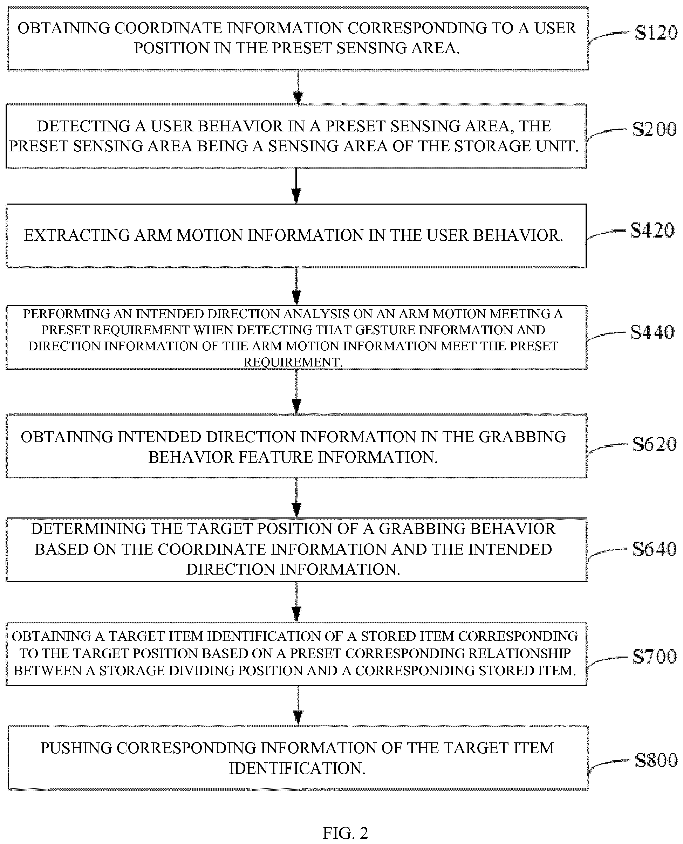

As shown in FIG. 2, in an embodiment, step S400 includes following steps.

Step S420, extracting arm motion information in the user behavior.

Using the arm motion of the user is the most intuitive way to determine the target position of the user. The most conventional method for the user to know the detail information of the item of interest is to take up the corresponding item. However, not all information of all items may be displayed directly on the item or the packaging of the item, such as some items sold in bulk, due to the different nature of the various items themselves, and there is a case that packaging information of the item is also incomplete. By extracting the arm motion information in the user behavior, it is possible to determine whether the user would like to take the item in the storage unit or not.

Step S440, performing an intended direction analysis on an arm motion meeting a preset requirement when detecting that gesture information and direction information of the arm motion information meet the preset requirement.

The gesture information includes information of a motion performed by the arm of the user, including handclap, raising a hand, moving, and the like. The direction information refers to a direction corresponding to the arm gesture. It can be determined that the arm motion meets the preset requirement only when it is detected that the direction information corresponding to the arm motion of the user is in the direction where the item storage area of the storage unit is located, and the corresponding gesture information is a movement to the item storage area of the storage unit; the intention of the arm motion meeting the requirement should be to grab the item. Based on the arm motion meeting the preset requirement, the specific direction in which the arm motion would like to move to the item storage area is determined, thereby determining the target position.

In an embodiment, step S400 includes:
extracting sight line information in the user behavior, and performing an intended direction analysis on the sight line information meeting a preset requirement.

The sight line information refers to the information of the locking position of the eye focus. The sight line information may be obtained by measuring the position of the eye relative to the head or performing eye tracking of the focus point of the eye in a measuring space. The sight line information may be analyzed and detected by electro oculography, scleral contact lens/search coil or a video-based method for combining corneal reflection. The sight line information meeting the preset requirement refers to the sight line information that the locking range of the sight line is in the item storage area of the storage unit. With further analysis of the sight line information that meets the preset requirement, the locking direction of the sight line of the user may be determined, thereby determining the target direction.

In an embodiment, before step S200, the method further includes:
step S120, obtaining coordinate information corresponding to a user position in the preset sensing area.

The coordinate information refers to a specific coordinate position of the user in the preset sensing area. By establishing a coordinate system, a relative position relationship between the user and the storage unit may be constructed. An accurate intended direction may be obtained by combining the position relationship and the direction information.

Step S600 includes the following steps.

Step S620, obtaining intended direction information in the grabbing behavior feature information.

In the embodiment, the intended direction information may be obtained from the result of the intended direction analysis on the arm motion, or may be obtained from the result of the intended direction analysis on the sight line information. It can be understood that, in other embodiments, the intended direction information may also be obtained by a comprehensive analysis combining the intended direction of the arm motion and the intended direction of the sight line information.

Step S640, determining the target position of a grabbing behavior based on the coordinate information and the intended direction information.

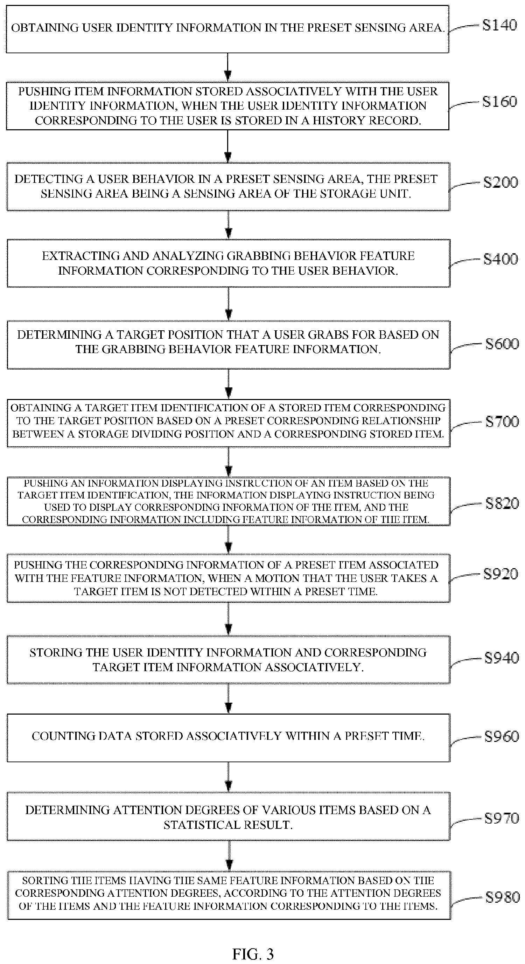

As shown in FIG. 3, in an embodiment, step S800 includes:
Step S820, pushing an information displaying instruction of an item based on the target item identification, the information displaying instruction being used to display corresponding information of the item, and the corresponding information including feature information of the item.

The information displaying instruction can display the item information to the customer through a voice, a text, an image, and the like.

After step S800, the method further includes:
step S920, pushing the corresponding information of a preset item associated with the feature information, when a motion that the user takes a target item is not detected within a preset time.

The corresponding information of the item is displayed to the user, so that the user can accurately understand the item in time. When the motion that the user takes the target item is not detected within the preset time, the corresponding information of the preset item associated with the feature information is pushed, so that the user may know an item similar to the item at the target position, which provides more selection for the user.

In an embodiment, before step S200, the method includes the following steps.

Step S140, obtaining user identity information in the preset sensing area.

The user identity information may be obtained through techniques such as face recognition.

Step S160, pushing item information stored associatively with the user identity information, when the user identity information corresponding to the user is stored in a history record.

After step S800, the method further includes:
step S940, storing the user identity information and corresponding target item information associatively.

By associating the target item information of interest to the user and the identity information of the user, the user may directly obtain the item information of interest at the next time. When the obtained user identity information can be matched to the user identity information corresponding to the user stored in the history record, the item information may be directly pushed to the user, which is convenient and quick, and is easy to meet the requirements of many users.

In an embodiment, after step S940, the method further includes the following steps.

Step S960, counting data stored associatively within a preset time.

The data stored associatively refers to the user identity information and the item of interest to the user, which can be determined based on the state of the arm motion of the user. For example, it is indicated that the degree of interest to the user for the item A is less than that for item B, when the motion state of the user for item A is "looking at the item", and the motion state for item B is "having grabbed". The counting refers to a summarizing process of an amount of data stored associatively.

Step S970, determining attention degrees of various items based on a statistical result.

The higher the degree of interest to the user for the item and the more interested users are, the higher the attention degree of the corresponding item will be.

Step S980, sorting the items having the same feature information based on the corresponding attention degrees, according to the attention degrees of the items and the feature information corresponding to the items.

The bestselling, similar products may be recommended to the user in time, by sorting the items with the same feature information according to the attention degrees.

In an application example, the storage unit is a box type freezer. The freezer is divided into a plurality of item storage areas, and each area stores the corresponding items. The item information of the preset recommended item is pushed, when detecting that the user is constantly approaching the preset sensing area. The recommended item includes the bestselling items in the storage unit. When detecting that the user enters the preset sensing area, the position information of the user is obtained, the summary information of all products within the corresponding range of the freezer corresponding to this position is pushed and fed back to the user through the display by means of audio, video, text, and the like. The user identity is identified, and the item information stored associatively with the user identity information is pushed, when it is matched that the user identity information corresponding to the user is stored in the history record. The behavior of the user in the preset sensing area is detected, and the corresponding behavior information meeting the preset requirement is extracted, such as the locking position of the sight line, the arm stretching to the corresponding item, the distance and the height of the face of the head relative to the item of interest. The position of the item of interest may be determined by detecting the gesture and the direction of the arm, or detecting the relative change relationship between the position of the head and the position of the arm of the user. The degrees of interest to the user in different items are judged, the target item is locked and corresponding information feedback is provided, based on the gesture and the direction of the arm, or based on the height of the head, the pointed direction of the arm, the distance, and the position of the face toward the item. The item information with the same feature information of the target item and with a higher attention degree is pushed to the user, when detecting that the user does not take the locked target item within a certain period of time. After the item information corresponding to the item identification is pushed, voice information of "know more about" fed back by the user is received, an operation instruction corresponding to the voice information of "know more about" fed back by the user is searched for, and the detailed information of the item corresponding to the item identification is pushed, if the user would like to know more about the detailed information of the item; and the voice information of "no interest" fed back by the user is received, an operation instruction corresponding to the voice information of "no interest" fed back by the user is searched for, and the item information corresponding to the item identification is no longer pushed, and in turn the item information of the preset recommended item is pushed, when the user would not like to know more about the detailed information of the item. The method for human-machine interaction in a storage unit has the characteristics of real-time, accurate, information interaction, and user-friendly human-machine interaction. The standing position, the arm, the face, the distance and the height of the head, and the relationship of the items of interest may be detected based on the image detecting function thereof. After being parsed and processed by a processor, the audio-visual information of the related items is displayed, and the labor costs are greatly reduced. That is, the consumer does not have to ask a sales promoter to know the information of the different items, and the shopping experience of the consumer is improved at the same time. The processor can more accurately collect and learn the purchase demands and the interested directions of the consumers on the different items in the freezer, and the consumption numbers of the different items, and the like, which may be digitized and statistically analyzed and generate consumption information data of the items, which is characterized by extensibility.

It should be understood that these steps are not necessarily performed sequentially as an order indicated by the arrows, although the various steps in the flowchart diagrams of FIGS. 1-3 are sequentially shown as indicated by the arrows. These steps are performed without strict order restriction, and these steps may be performed in other orders, unless there is an explicit statement herein. Moreover, at least some of the steps in FIGS. 1-3 may include a plurality of sub-steps or a plurality of stages that are not necessarily performed at the same time, but may be performed at different times. These sub-steps or stages are not necessarily performed sequentially, but may be performed in turns or alternately with at least some of the other steps or the sub-steps or the stages of the other steps.

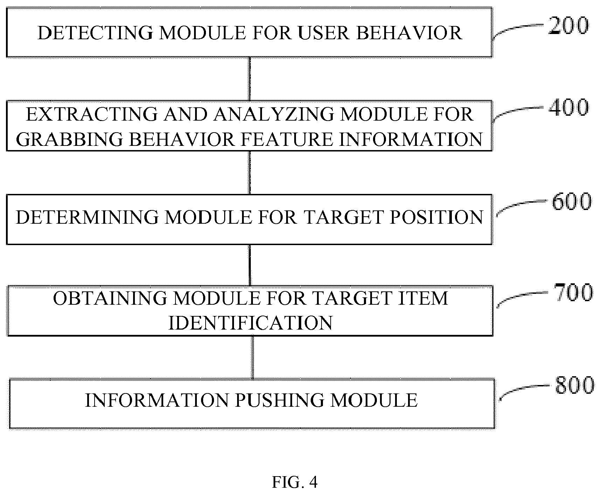

As shown in FIG. 4, a device for human-machine interaction in a storage unit is provided, and includes:
a detecting module for user behavior 200, configured to detect a user behavior in a preset sensing area, the preset sensing area being a sensing area of the storage unit;
an extracting and analyzing module for grabbing behavior feature information 400, configured to extract and analyze grabbing behavior feature information corresponding to the user behavior;
a determining module for target position 600, configured to determine a target position that a user grabs for based on the grabbing behavior feature information;
an obtaining module for target item identification 700, configured to obtain a target item identification of a stored item corresponding to the target position based on a preset corresponding relationship between a storage dividing position and a corresponding stored item; and
an information pushing module 800, configured to push corresponding information of the target item identification.

In the above device for human-machine interaction in a storage unit, by detecting a user behavior in a preset sensing area, extracting and analyzing grabbing behavior feature information corresponding to the user behavior, it is possible to obtain accurate and effective grabbing behavior information of the user for the storage unit, and determine a target position that a user grabs for. A corresponding target item identification is obtained, and corresponding information of the target item identification is pushed to the user. The target position of the user behavior may be determined by detecting and analyzing the user behavior, and the item desired by the user can be determined, which realizes an effect that related information of the corresponding item of the target position may be actively pushed to the user in real time, so that the user may quickly and easily know corresponding information of the desired item.

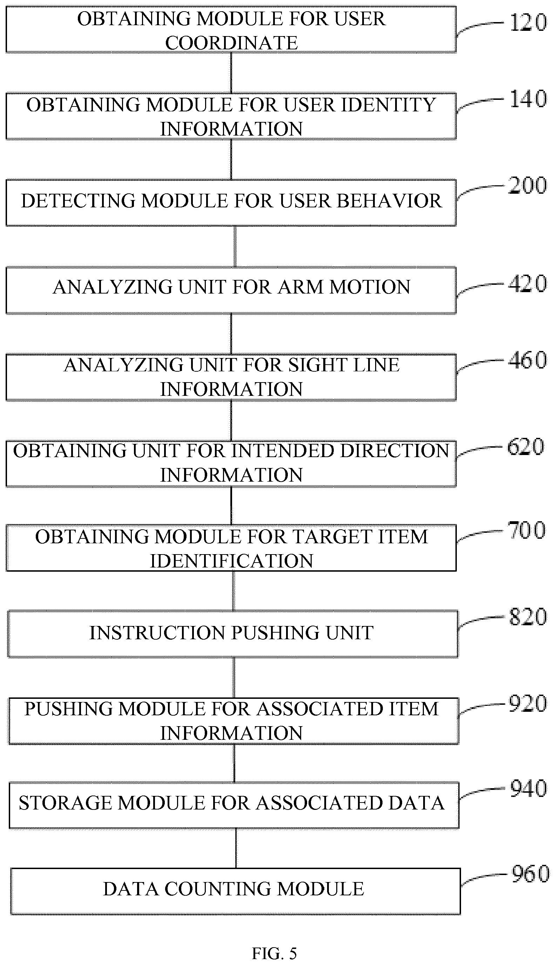

As shown in FIG. 5, in an embodiment, the extracting and analyzing module for grabbing behavior feature information 400 includes:
an analyzing unit for arm motion 420, configured to extract arm motion information in the user behavior, and to perform an intended direction analysis on an arm motion meeting a preset requirement when detecting that gesture information and direction information of the arm motion information meet the preset requirement.

In an embodiment, the extracting and analyzing module for grabbing behavior feature information 400 includes:
an analyzing unit for sight line information 460, configured to extract sight line information in the user behavior, and perform an intended direction analysis on the sight line information meeting a preset requirement.

In an embodiment, the device for human-machine interaction in a storage unit further includes:
an obtaining module for user coordinate 120, configured to obtain coordinate information corresponding to a user position in the preset sensing area.

The determining module for target position 600 includes:
an obtaining unit for intended direction information 620, configured to obtain intended direction information in the grabbing behavior feature information; and
an determining unit for target position, configured to determine the target position of a grabbing behavior based on the coordinate information and the intended direction information.

In an embodiment, the information pushing module 800 includes:
an instruction pushing unit 820, configured to push an information displaying instruction of an item based on the target item identification, the information displaying instruction being used to display corresponding information of the item, and the corresponding information including feature information of the item.

The device for human-machine interaction in a storage unit further includes:
an pushing module for associated item information 920, configured to push the corresponding information of a preset item associated with the feature information, when a motion that the user takes a target item is not detected within a preset time.

In an embodiment, the device for human-machine interaction in a storage unit further includes:
an obtaining module for user identity information 140, configured to obtain user identity information in the preset sensing area, and to push item information stored associatively with the user identity information, when the user identity information corresponding to the user is stored in a history record; and
a storage module for associated data 940, configured to store and associate the user identity information with corresponding target item information.

In an embodiment, the device for human-machine interaction in a storage unit further includes:
a data counting module 960, configured to count data stored associatively within a preset time, to determine attention degrees of various items based on a statistical result, and to sort the items having the same feature information based on the corresponding attention degrees, according to the attention degrees of the items and the feature information corresponding to the items.

The specific definition of the device for human-machine interaction in a storage unit may refer to the above definition of the method for human-machine interaction in a storage unit, and the details are not described herein again. Each module of the above device for human-machine interaction in a storage unit may be implemented in all or in part by software, hardware or combinations thereof. Each of the above modules may be embedded in or independent of a processor in a computer device in a form of hardware, or may be stored in a memory in the computer device in a form of software, so as to be easily called by the processor to perform the operation corresponding to each of the above modules.

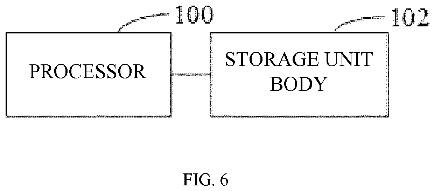

As shown in FIG. 6, a storage unit is provided and includes a storage unit body 102 and a processor 100. The storage unit body 102 is connected with the processor 100. The processor 100 stores computer programs, which, when executed by the processor, cause the processor to implement following steps:
detecting a user behavior in a preset sensing area, the preset sensing area being a sensing area of the storage unit;
extracting and analyzing grabbing behavior feature information corresponding to the user behavior;
determining a target position that a user grabs for based on the grabbing behavior feature information;
obtaining a target item identification of a stored item corresponding to the target position based on a preset corresponding relationship between a storage dividing position and a corresponding stored item; and
pushing corresponding information of the target item identification.

In the above storage unit, by detecting a user behavior in a preset sensing area, extracting and analyzing grabbing behavior feature information corresponding to the user behavior, it is possible to obtain accurate and effective grabbing behavior information of the user for the storage unit, and determine a target position that a user grabs for. A corresponding target item identification is obtained, and corresponding information of the target item identification is pushed to the user. The target position of the user behavior may be determined by detecting and analyzing the user behavior, and the item desired by the user can be determined, which realizes an effect that related information of the corresponding item of the target position may be actively pushed to the user in real time, so that the user may quickly and easily know corresponding information of the desired item.

In an embodiment, the processor implements the following steps when executing the computer programs:
extracting arm motion information in the user behavior; and
performing an intended direction analysis on an arm motion meeting a preset requirement when detecting that gesture information and direction information of the arm motion information meet the preset requirement.

In an embodiment, the processor implements the following steps when executing the computer programs:
extracting sight line information in the user behavior, and performing an intended direction analysis on the sight line information meeting a preset requirement.

In an embodiment, the processor implements the following steps when executing the computer programs:
obtaining coordinate information corresponding to a user position in the preset sensing area;
obtaining intended direction information in the grabbing behavior feature information; and
determining the target position of a grabbing behavior based on the coordinate information and the intended direction information.

In an embodiment, the processor implements the following steps when executing the computer programs:
pushing an information displaying instruction of an item based on the target item identification, the information displaying instruction being used to display corresponding information of the item, and the corresponding information including feature information of the item; and
pushing the corresponding information of a preset item associated with the feature information, when a motion that the user takes a target item is not detected within a preset time.

In an embodiment, the processor implements the following steps when executing the computer programs:
obtaining user identity information in the preset sensing area;
pushing item information stored associatively with the user identity information, when the user identity information corresponding to a user is stored in a history record; and
storing the user identity information and corresponding target item information associatively.

In an embodiment, the processor implements the following steps when executing the computer programs:
counting data stored associatively within a preset time;
determining attention degrees of various items based on a statistical result; and
sorting the items having the same feature information based on the corresponding attention degrees according to the attention degrees of the items and the feature information corresponding to the items.

A computer readable storage medium is provided, and stores computer programs. When the computer programs are executed by a processor, the processor implements following steps:
detecting a user behavior in a preset sensing area, the preset sensing area being a sensing area of the storage unit;
extracting and analyzing grabbing behavior feature information corresponding to the user behavior;
determining a target position that a user grabs for based on the grabbing behavior feature information;
obtaining a target item identification of a stored item corresponding to the target position based on a preset corresponding relationship between a storage dividing position and a corresponding stored item; and
pushing corresponding information of the target item identification.

In the above storage medium for implementing the method for human-machine interaction in a storage unit, by detecting a user behavior in a preset sensing area, extracting and analyzing grabbing behavior feature information corresponding to the user behavior, it is possible to obtain accurate and effective grabbing behavior information of the user for the storage unit, and determine a target position that a user grabs for. A corresponding target item identification is obtained, and corresponding information of the target item identification is pushed to the user. The target position of the user behavior may be determined by detecting and analyzing the user behavior, and the item desired by the user can be determined, which realizes an effect that related information of the corresponding item of the target position may be actively pushed to the user in real time, so that the user may quickly and easily know corresponding information of the desired item.

In an embodiment, the processor implements the following steps when executing the computer programs:
extracting arm motion information in the user behavior; and
performing an intended direction analysis on an arm motion meeting a preset requirement when detecting that gesture information and direction information of the arm motion information meet the preset requirement.

In an embodiment, the processor implements the following steps when executing the computer programs:
extracting sight line information in the user behavior, and performing an intended direction analysis on the sight line information meeting a preset requirement.

In an embodiment, the processor implements the following steps when executing the computer programs:
obtaining coordinate information corresponding to a user position in the preset sensing area;
obtaining intended direction information in the grabbing behavior feature information; and
determining the target position of a grabbing behavior based on the coordinate information and the intended direction information.

In an embodiment, the processor implements the following steps when executing the computer programs:
pushing an information displaying instruction of an item based on the target item identification, the information displaying instruction being used to display corresponding information of the item, and the corresponding information including feature information of the item; and
pushing the corresponding information of a preset item associated with the feature information, when a motion that the user takes a target item is not detected within a preset time.

In an embodiment, the processor implements the following steps when executing the computer programs:
obtaining user identity information in the preset sensing area;
pushing item information stored associatively with the user identity information, when the user identity information corresponding to the user is stored in a history record; and
storing the user identity information and corresponding target item information associatively.

In an embodiment, the processor implements the following steps when executing the computer programs:
counting data stored associatively within a preset time;
determining attention degrees of various items based on a statistical result; and
sorting the items having the same feature information based on the corresponding attention degrees according to the attention degrees of the items and the feature information corresponding to the items.

Those skilled in the art may understand that, all or part of the processes of the methods in the above embodiments may be implemented by related hardware which is instructed by the computer programs. The computer programs may be stored in a non-volatile computer readable storage medium, which, when executed, may implement the processes of the embodiments of the above methods. Any reference to the memory, the storage, the database, or the other medium used in the various embodiments provided in the present disclosure may include a non-volatile and/or volatile memory. The non-volatile memory may include a read only memory (ROM), a programmable read only memory (PROM), an electrically programmable read only memory (EPROM), an electrically erasable programmable read only memory (EEPROM) or a flash memory. The volatile memory may include a random access memory (RAM) or an external cache memory. As illustration and not limitation, RAM is available in a variety of formats, such as static RAM (SRAM), dynamic RAM (DRAM), synchronous DRAM (SDRAM), double data rate SDRAM (DDRSDRAM), enhanced SDRAM (ESDRAM), sync link DRAM (SLDRAM), Rambus direct RAM (RDRAM), direct memory bus dynamic RAM (DRDRAM), and memory bus dynamic RAM (RDRAM).

The technical features of the above embodiments may be combined arbitrarily. To simplify the description, all the possible combinations of the technical features of the above embodiments are not described. However, all of the combinations of these technical features should be considered as within the scope recorded in the description, as long as the combinations of the technical features have no collision with each other.

The above-described embodiments merely represent several embodiments of the present disclosure, and the description thereof is more specific and detailed, but it should not be construed as limiting the scope of the present disclosure. It should be noted that, for those skilled in the art, several deformations and improvements may be made without departing from the concept of the present disclosure, and these are all within the protection scope of the present disclosure. Therefore, the protection scope of the present disclosure shall be subject to the appended claims.

## Claims

1. A method for human-machine interaction in a storage unit, comprising:
detecting a user behavior in a preset sensing area, the preset sensing area being a sensing area of the storage unit;
extracting and analyzing grabbing behavior feature information corresponding to the user behavior;
determining a target position that a user grabs for based on the grabbing behavior feature information;
obtaining a target item identification of a stored item corresponding to the target position based on a preset corresponding relationship between a storage dividing position and a corresponding stored item; and
pushing corresponding information of the target item identification.

2. The method for human-machine interaction in a storage unit according to claim 1, wherein extracting and analyzing grabbing behavior feature information corresponding to the user behavior comprises:
extracting arm motion information in the user behavior; and
performing an intended direction analysis on an arm motion meeting a preset requirement when detecting that gesture information and direction information of the arm motion information meet the preset requirement.

3. The method for human-machine interaction in a storage unit according to claim 1, wherein extracting and analyzing grabbing behavior feature information corresponding to the user behavior comprises:
extracting sight line information in the user behavior, and performing an intended direction analysis on the sight line information meeting a preset requirement.

4. The method for human-machine interaction in a storage unit according to claim 2 or 3, wherein before detecting a user behavior in a preset sensing area, the method further comprises:
obtaining coordinate information corresponding to a user position in the preset sensing area;
wherein determining a target position that a user grabs for based on the grabbing behavior feature information comprises:
obtaining intended direction information in the grabbing behavior feature information; and
determining the target position of a grabbing behavior based on the coordinate information and the intended direction information.

5. The method for human-machine interaction in a storage unit according to claim 1, wherein pushing corresponding information of the target item identification comprises:
pushing an information displaying instruction of an item based on the target item identification, the information displaying instruction being used to display corresponding information of the item, and the corresponding information including feature information of the item;
wherein after pushing corresponding information of the target item identification, the method further comprises:
pushing the corresponding information of a preset item associated with the feature information, when a motion that the user takes a target item is not detected within a preset time.

6. The method for human-machine interaction in a storage unit according to claim 1, wherein before detecting a user behavior in a preset sensing area, the method further comprises:
obtaining user identity information in the preset sensing area; and
pushing item information stored associatively with the user identity information when the user identity information corresponding to a user is stored in a history record;
wherein after pushing corresponding information of the target item identification, the method further comprises:
storing the user identity information and corresponding target item information associatively.

7. The method for human-machine interaction in a storage unit according to claim 6, wherein after storing the user identity information and corresponding target item information associatively, the method further comprises:
counting data stored associatively within a preset time;
determining attention degrees of various items based on a statistical result; and
sorting the items having the same feature information based on the corresponding attention degrees according to the attention degrees of the items and the feature information corresponding to the items.

8. A device for human-machine interaction in a storage unit, comprising:
a detecting module for user behavior, configured to detect a user behavior in a preset sensing area, the preset sensing area being a sensing area of the storage unit;
an extracting and analyzing module for grabbing behavior feature information, configured to extract and analyze grabbing behavior feature information corresponding to the user behavior;
a determining module for target position, configured to determine a target position that a user grabs for based on the grabbing behavior feature information;
an obtaining module for target item identification, configured to obtain a target item identification of a stored item corresponding to the target position based on a preset corresponding relationship between a storage dividing position and a corresponding stored item; and
an information pushing module, configured to push corresponding information of the target item identification.

9. A storage unit comprising a storage unit body and a processor, the storage unit body being connected with the processor, the processor storing computer programs, which, when executed by the processor, cause the processor to implement steps of the method according to any one of claims 1 to 7.

10. A computer readable storage medium, storing computer programs, wherein when the computer programs are executed by a processor, the processor implements steps of the method according to any one of claims 1 to 7.
